# EUROPEAN PATENT SPECIFICATION

(11) **EP 4 434 598 B1**
(45) Date of publication and mention of the grant of the patent: **01.10.2025**
(21) Application number: 24164517.5
(22) Date of filing: 19.03.2024
(51) Int. Cl.: A63G 7/00, A63G 31/00, G06F 9/46, B61L 1/00

(54) **SYSTEM AND METHOD FOR CONTROLLING CAROUSELS**
SYSTEM UND VERFAHREN ZUR STEUERUNG VON KARUSSELLEN
SYSTÈME ET PROCÉDÉ DE COMMANDE DE CARROUSELS

(30) Priority: 21.03.2023 IT 202300005340
(43) Date of publication of application: 25.09.2024
(73) Proprietor: Antonio Zamperla S.p.A., 36077 Altavilla Vicentina (VI) (IT); Xteam Software Solutions Societá A Responsabilitá Limitata Semplificata, 45020 Giacciano con Baruchella (RO) (IT)
(72) Inventor: ZAMPERLA, Antonio, 36100 Vicenza (VI) (IT); BERTI, Fabio, 37138 Verona (VR) (IT); TAMASCELLI, Stefano, 45020 Giacciano con Baruchella (RO) (IT)
(74) Representative: Caldon, Giuliano

(56) References cited:
- WO-A1-95/05223
- US-A1- 2007 021 845
- US-A1- 2018 140 957
- US-A1- 2019 054 941
- US-B2- 10 514 933

## Description

### Field of application

The present invention regards a system and method for controlling carousels.

The present system and method are advantageously inserted in the field of amusement parks, and in particular in the field of production of carousels and equipment for amusement parks.

In particular, the system and the method are aimed to allow the correct management and maintenance of the carousels present in one or more amusement parks.

### State of the art

The amusement parks, by now widespread, generally comprise a great number of carousels and attractions for the public at their interior.

In particular, many of the carousels present in amusement parks (such as amusement parks, panoramic wheels, flying discs etc.) as is known have large-size structures on which multiple movable parts are mounted, which are driven in an automated manner by various motor groups or actuator groups.

For example, the carousels which comprise multiple movable cars along a rail (such as roller coasters) are provided with numerous electrical, hydraulic or pneumatic actuation devices, as well as with numerous sensors, in order to drive the advancement, the acceleration, the slowing and the stopping of the cars in a controlled manner according to the provided specifications and ensure the required safety standards.

The increasingly high structural and operative complexity of the carousels involves an increasingly greater difficulty in managing the correct operation thereof, as well as, in particular, preventing possible failure that can involve machine stops.

On such matter, known from the patent US 10,514,933 B2 is a control system of a carousel (of roller coasters) which comprises a control unit which communicates, by means of wireless transmission, with a drive device mounted on each car of the carousel, in particular in order to receive from such drive device a series of operative parameters relative to the corresponding car, such as position, speed, motor data and brakes data, load on board, etc.

The data acquired, in addition for controlling the carousel (for example, in order to synchronize the movements of the cars), can also be used for planning specific maintenance interventions (e.g. based on the work cycles over time). In addition, the control unit can send suitable instructions to the drive devices in order to automatically convey, towards a suitable hangar, the cars that require maintenance.

The control systems of known type for the amusement parks nevertheless have various limits, in particular tied to the possibility of previously and reliably identifying possible failures or irregularities of the carousel.

**In** particular, the data acquired by the control system do not allow suitably correlating the various acquired data with possible events that can be verified on the carousel, nor by operators who work remotely nor by possible operators on site.

**In** addition, the parameters that can be detected by the control system are generally quite numerous (even many dozens for each carousel), involving a high size of the data to be transmitted or to be stored, both in a remote server (also cloud) and in a local device in the park or in the carousel itself. The acquisition and the storage of such high amount of data are therefore not always easy, in particular without the use of complicated and costly computing structures.

For such reason, often the control systems of known type are limited to transmitting at most a dozen of the acquired parameters to the remote services, allowing the operators who work remotely to access only a small part of the available information.

In addition, the management from a remote server or cloud is not possible in parks where a particularly powerful wi-fi transmission and/or Internet connection are not available, for example due to the technology present in the country of the park or management policies of the latter.

### Presentation of the invention

Main object of the present invention is therefore that of overcoming the drawbacks manifested by the solutions of known type considered above by providing a system and a method for controlling carousels that allow reliably detecting, in a timely manner, possible failures or problems of the carousel which require repair or maintenance interventions. Further object of the present invention is to provide a system and a method for controlling carousels which allow an operator on site to carry out a substantially complete control analysis of the carousel.

Further object of the present invention is to provide a system and a method for controlling carousels which allow efficiently managing a high number of carousels placed in one or more different parks.

Further object of the present invention is to provide a system and a method for controlling carousels which require limited implementation and management costs.

### Brief description of the drawings

The technical characteristics of the invention, according to the aforesaid objects, are clearly seen in the below-reported claims and the advantages thereof will be more evident in the following detailed description, made with reference to the enclosed drawings, which represent a merely exemplifying and non-limiting embodiment of the invention, in which:
- figure 1 shows a main scheme of the control system for carousels, object of the present invention;
- figure 2 shows, in schematized form, a particular present control system, relative to a portable electronic device;
- figure 3 shows an example of a possible display reproduced in a screen of the aforesaid electronic device;
- figure 4 shows several graphs which represent, in an exemplifying manner, corresponding operative parameters processed by the present system and by the present method.

### Detailed description

With reference to the enclosed drawings, reference number 1 overall indicates the control system for carousels, object of the present invention.

The present control system 1 is advantageously intended to be used for optimizing the management of one or more carousels (in one same amusement park or different parks), in particular for monitoring the correct operative state of the carousels and establishing or planning, ahead of time, maintenance or repair interventions.

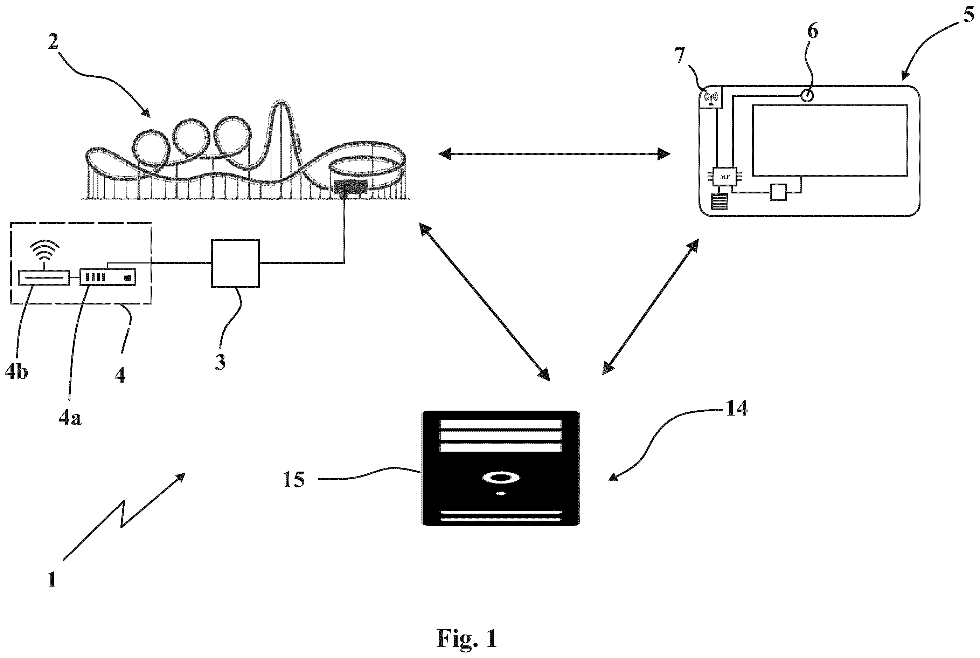

With reference to the exemplifying scheme illustrated in figure 1, the present control system 1 comprises at least one carousel 2 installed for example in an amusement park. Of course, as indicated above, the control system 1 can comprise multiple carousels (installed in the same park or in different parks), that which will be discussed hereinbelow for the carousel 2 being applicable for each additional carousel forming part of the system 1 itself. Advantageously, in a per se known manner, the carousel 2 comprises a support structure fixed to the ground and one or more multiple members mounted on such support structure. The carousel 2 also comprises actuation means arranged for moving the movable members in an automated manner and which can be in particular of mechanical, electrical, hydraulic or pneumatic type.

The carousel 2 can be of any type (e.g. roller coasters, panoramic wheels, flying discs, flying chairs, train, carousel, etc.) whose components are generically described are per se known known to the man skilled in the art and hence will not be further described in the present document.

For example, the carousel 2 can be of roller coaster type, in which the support structure comprises a support framework for one or more rails, the mobile members comprise one or more cars mounted on the rail, and the actuation means comprise all the components (motors, actuator, brake groups, electrical and/or hydraulic systems, valves, etc.) which determine the movement of the cars along the rail.

The carousel 2 comprises a control unit 3 (in particular of electronic type), which advantageously is operatively connected to the actuation means in order to monitor and/or drive their operation.

Preferably, the control unit 3 comprises one or more computers. For example, the control unit 3 comprises a central control module (such as a PLC or a centralized computer) connected to the different components of the carousel 2, and/or multiple local modules (e.g. constituted by PLCs), each associated with a corresponding component of the carousel 2, for example a movable member of the latter (such as a car of the roller coasters).

The control unit 3 is arranged for detecting at least one operative parameter P associated with the carousel 2 itself, and preferably multiple different operative parameters P, each indicative of the state or of a characteristic of the carousel 2 or of a component thereof, and which provide useful information for verifying the conduct of the carousel 2 in operation and detect possible irregularities thereof.

For example, the aforesaid operative parameters P can comprise the output current or the output voltage of an electric motor, the number of cycles executed by the carousel 2, a state variable relative to the actuation command for a valve, the oil pressure of a hydraulic component, the position of a cylinder, a Boolean variable relative to the exceeding of a specific operative threshold (e.g. the limit temperature of the oil of a motor), etc.

The control unit 3 is arranged, in particular based on the type of operative parameter P, to acquire the latter directly (at the central module or local modules) and/or through suitable sensor means of the carousel 2, such as temperature sensors, pressure sensors, inertia sensors, vibration sensors, acoustic sensors, encoders, etc.

The carousel 2 also comprises at least one transmission unit 4 operatively connected to the control unit 3 and arranged for transmitting a first data set containing a first succession of acquired values Va of the operative parameter P provided by the control unit 3 itself.

In particular, the transmission unit 4 is arranged for processing the data (containing the acquired values Va of the operative parameters P) provided by the control unit 3 so as to generate the aforesaid first data set in a suitable format (and preferably optimized) for the transmission (wireless or wired) to other components of the control system 1, as described in detail hereinbelow.

The processing operations executed by the transmission unit 4 can comprise, for example, operations of encoding, conversion, selection (e.g. for transmitting only several of the operative parameters P provided by the control unit 3), etc., which can per se be of conventional type and thus is not described in detail herein.

In accordance with a particular embodiment, the transmission unit 4 comprises one or more components hardware separate from the control unit 3. Advantageously, the transmission unit 4 comprises an acquisition device 4a (such as an industrial computer, for example with an edge architecture), which is in data communication with the control unit 3 in order to receive from the latter the operative parameters P of the carousel 2 and is arranged for generating the first data set to be transmitted. In addition, the transmission unit 4 preferably comprises a transceiving device 4b, such as a router, in particular provided with an antenna radio, connected to the acquisition device 4a and arranged for implementing the transmission of the first data set. Advantageously, the transmission unit 4 can be implemented in one or more modules (each comprising in particular corresponding acquisition devices 4a and transceiving devices 4b), including a central module connected to the central control module of the control unit 3, and/or multiple peripheral modules, each of which connected to the corresponding local module of the control unit 3 and is suitably mounted on the same movable member (e.g. a car) of the carousel 2.

In accordance with a different embodiment, the transmission unit 4 is integrated within the control unit 3, in particular in its central control module and/or in its local modules. According to the present invention, the control system 1 comprises a portable electronic device 5, which is intended to be provided for example to an operator of the amusement park in which the carousel 2 is installed, who can be an employee of the park or an operator of an outside company (possibly the same producer company) who manages the maintenance of the carousel 2.

Advantageously, the control system 1 comprises multiple aforesaid electronic devices 5, intended to be employed by the operators in the same amusement park or in multiple parks in which carousels 2 are installed belonging to the control system 1.

For example, the electronic device 5 can be a tablet, a portable computer, an augmented reality visor (e.g. in the form of eyeglasses), etc.

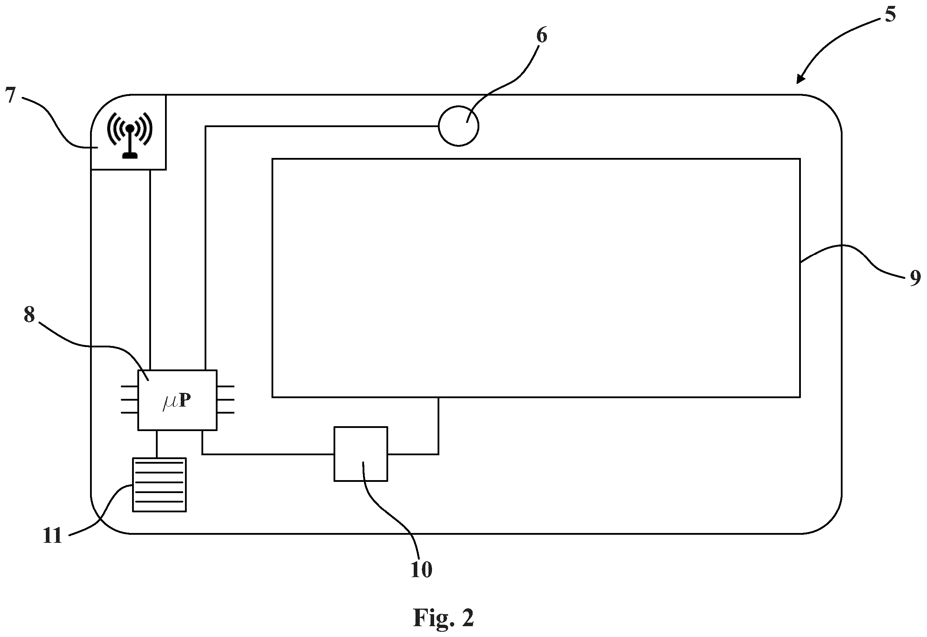

With reference to the example of figure 2, the electronic device 5 comprises a video camera 6 actuatable for filming videos, in particular of the carousel 2 (as discussed hereinbelow). More in detail, the video camera 6 is of digital type and is arranged for acquiring videos with a given frame rate (e.g. 30 or 60 fps).

The electronic device 5 also comprises a communication unit 7 arranged for communicating (in particular by means of wireless communication) with the transmission unit 4 of the carousel 2, in particular so as to receive the first data set containing the operative parameters P acquired by the control unit 3 of the carousel 2 itself.

In particular, the communication unit 7 comprises a transceiving module thereof, in particular provided with an antenna, adapted to detect the first data set sent, in radio signal form, from the transmission unit 4. Preferably, alternatively or additionally, the communication unit 7 comprises at least one communication port arranged for being connected via cable to the transmission unit 4 (suitably provided with suitable connection port) so as to implement the transmission data in wired form.

Advantageously, the communication unit 7 is arranged for acquiring and decoding the first data set, so as to convert it into a format readable by further components of the electronic device 5 described hereinbelow.

The electronic device 5 also comprises a processing unit 8 (for example comprising a microprocessor) operatively connected to the video camera 6 and to the communication unit 7, in particular in order to process the first data set and the videos provided, respectively, by the latter.

Advantageously, the electronic device 5 comprises a screen 9 operatively connected to the processing unit 8 and, in particular, controlled by the latter through a suitable video module 10 (e.g. a video card, also integrated in the processing unit 8 itself).

Advantageously, the electronic device 5 comprises a memory 11 operatively connected at least to the processing unit 8 and adapted to archive (possibly temporarily) the data acquired and generated by the electronic device 5.

As indicated above, the transmission unit 4 of the carousel 2 is arranged for transmitting to the communication unit 7 of the electronic device 5 the first data set containing the first succession of acquired values Va of the operative parameters P acquired by the control unit 3 of the carousel 2.

The transmission unit 4 transmits the first data set with a given first sampling frequency (e.g. 25 Hz), which can be determined for example by the performance of the computer of the transmission unit 4 and/or by the sampling frequency with which the data relative to the operative parameters P are acquired by the control unit 3.

In the first succession of the first data set, each acquired value Va is associated with a corresponding first (sampling) time instant t₁ which is determined by the aforesaid first sampling frequency and which is indicative of the instant in which the operative parameter P took on the acquired value Va associated therewith.

In particular, the first data set contains a first time stamp given by the succession of the first time instants t₁ associated with the corresponding acquired values Va of the operative parameter P.

The processing unit 8 of the electronic device 5 is arranged for actuating the video camera 6 to film at least one part of the carousel 2 in a given time interval, in particular during the operation of the carousel 2 itself. Such actuation is for example enabled to follow a start command made by the operator on the electronic device 5.

Following such actuation of the video camera 6, the latter is adapted to acquire video data which contain a sequence of photograms F that constitute a video of the carousel 2 in the aforesaid time interval.

More in detail, the video camera 6 acquires the photograms F with a given second sampling frequency, which in particular corresponds with the frame rate of the video camera 6 itself. In the sequence of photograms F, each photogram F is associated with a corresponding second (sampling) time instant t₂ which is determined by the aforesaid second sampling frequency of the video camera 6 and is indicative of the instant in which the carousel 2 appears as in the photogram F associated therewith.

In particular, the video data generated by the video camera 6 contain a second time stamp given by the succession of the second time instants t₂ associated with the corresponding photograms F.

The second sampling frequency (e.g. 60 Hz) of the video camera 6 is greater than the first sampling frequency (e.g. 25 Hz) with which the first data set (containing the acquired values Va of the operative parameters P of the carousel 2) is transmitted by the transmission unit 4 of the carousel 2 to the communication unit 7 of the electronic device 5. Of course, during the time interval, the video camera 6 can be directed and set by the operator in order to film the entire carousel 2 or only one or more parts of interest of the latter, as a function of the specific control needs.

The processing unit 8 of the electronic device 5 is advantageously arranged for actuating the communication unit 7 of the latter to initialize the transmission unit 4 of the carousel 2 for the transmission of the first data set. The communication unit 7 is then adapted to receive, from the transmission unit 4 of the carousel 2, the first data set containing the acquired values Va of the operative parameter P which were acquired by the control unit 3 of the carousel 2 during the time interval in which the video camera 6 films the video of the carousel 2 itself.

Advantageously, since the time of the start of such transmission, there is a continuous reception of the first data set (structured in particular in data packets) from the transmission unit 4 of the carousel 2 to the communication unit 7 of the electronic device 5. Preferably, each data packet comprises the acquired values Va of the operative parameters P of the carousel 2 in the corresponding first time instant t₁. In particular, during the time interval in which the video camera 6 films the carousel 2, the communication unit 7 of the electronic device 5 receives a number of data packets that is proportional to the first sampling frequency of the transmission unit 4 of the carousel 2.

Advantageously, when the video camera 6 is started, the processing unit 8 is arranged (in particular automatically by means of trigger sent by the transmission unit 4 or by means of command of the operator) to initialize a process for saving the video data generated by the video camera 6 and the first data set containing the acquired values Va of the operative parameters P and received by the transmission unit 4 of the carousel 2.

Advantageously, the first data set and the video data are stored in the memory 11 of the electronic device 5.

The processing unit 8 of the electronic device 5 is arranged for synchronizing the first time instants t₁ (associated with the first succession of acquired values Va of the operative parameter P) with the second time instants t₂ (associated with the time sequence of the photograms F).

Advantageously, such synchronization is executed by the processing unit 8 by subtracting, from the first time instants t₁, a given delay time determined by the transmission of the first data set by the transmission unit 4 of the carousel 2 to the communication unit 7 of the electronic device 5.

In particular, the aforesaid delay time is indicative of the time that the first data set (e.g. in radial signal form, in the case wireless transmission) employs for traveling from the transmission unit 4 of the carousel 2 to the communication unit 7 of the electronic device 5. Such delay time is advantageously calculated by means of processes that are per se known (for example based on median values) and is on the order of several milliseconds (e.g. 50 ms).

The aforesaid synchronization operation allows aligning the initial time instants of the first succession of acquired values Va of the operative parameter P and of the sequence of photograms F, identifying therefore a common time origin of the time interval in which such data are acquired.

However, as indicated above, the first sampling frequency of the acquired values Va of the operative parameter P is different from the second sampling frequency of the photograms F, and in particular the latter is greater than the first.

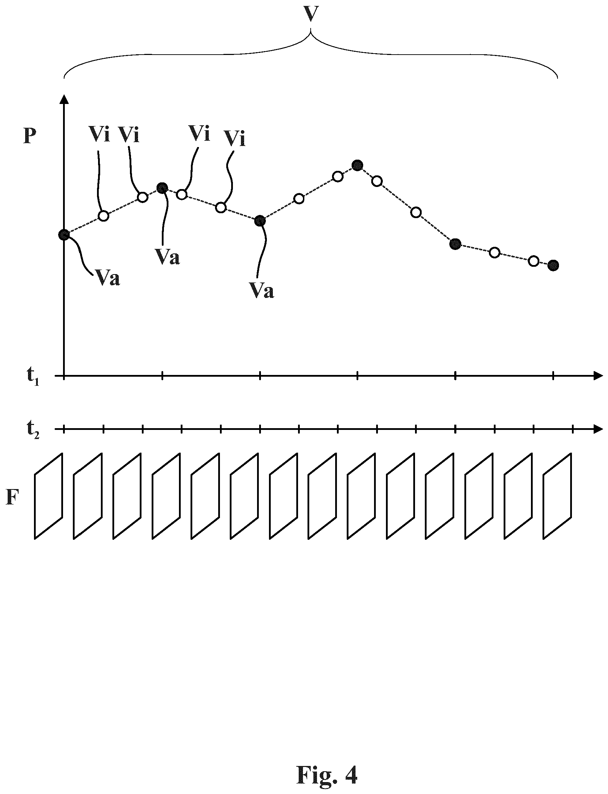

Therefore, as schematically represented in the graphs of the example of figure 4, even if the acquired values Va and the photograms F have a same time origin, the first time instants t₁ (determined by the first sampling frequency) do not coincide with the second time instants t₂ (determined by the second sampling frequency). In particular, even if the second sampling frequency was a multiple of the first sampling frequency (as in the example of figure 4), between two first adjacent time instants t₁ there would be one or more second time instants t₂. This means that, for the photograms F associated with the latter second time instants t₂, acquired values Va of the operative parameter P are not present and, therefore, the values which the operative parameter P acquires when the carousel 2 is represented in the photograms F associated with the aforesaid second time instants t₂, that fall between two successive first time instants t₁, would not be available.

For the purpose of resolving such technical problem, the control system 1, object of the present invention, provides that the processing unit 8 of the electronic device 5 be arranged for applying, to the succession of acquired values Va of the operative parameter P, at least one interpolation function, which, based on such acquired values Va, calculates interpolated values Vi of the operative parameter P that are associated with second time instants t₂ which are prior to and/or following each first time instant t₁.

The processing unit 8 is also arranged for generating a second data set containing a second succession of values V of the operative parameter P obtained from the aforesaid interpolated values Vi (and advantageously from the acquired values Va), in which each value V of such second succession is associated with a corresponding second time instant t₂.

In accordance with the example of figure 4, the aforesaid second succession of values V is given by the union of the acquired values Va and of the interpolated values Vi.

In accordance with a different example (in particular when the second sampling frequency is not a multiple of the first sampling frequency, and therefore not all of the first time instants t₁ coincide with corresponding second time instants t₂), the second succession of values V is given by the union of the interpolated values Vi and of several acquired values Va, or only by the interpolated values Vi.

In this manner, the claimed characteristics of the present control system 1 allow determining reliable values of the operative parameter P substantially for all the photograms F of the video of the carousel 2 filmed by the video camera 6 of the electronic device 5.

This allows an operator to identify, for all the photograms F of the video (and hence for all the positions of the carousel 2 represented in the latter) corresponding values that the operative parameter P took on in such photograms F. Thus, the operator, for each acquired image of the carousel 2, can examine a corresponding value V of the operative parameter P and detect if possible irregularities of the position of the carousel 2 are correlated to such operative parameter P.

In this manner, the operator is capable of examining with extreme precision the operation of the carousel 2 and identifying, in a particularly efficient and reliable manner, if this has irregularities and the factors have led to such irregularities, being able to establish very precise correlations between the position of the carousel 2 and one or more of the operative parameters P of the latter.

Advantageously, the present control system 1 is particular recommended for carousels 2 whose movable members are moved very quickly, for example as in the roller coasters where the cars are moved even at several dozen meters per second. **In** such situations, the position taken on by the movable member from one photogram F to the other of the video can change in a significant manner, and this the availability of values V of the operative parameters P in each photogram F allows precisely identifying the specific configuration of the carousel 2 in which possible irregular values can be verified for the operative parameters P, therefore the detection, in the quickest and most reliable manner, of the causes of the encountered irregularities.

In particular, the present control system 1 provides that, during the acquisition of the video of the carousel 2, the electronic device 5 acquires (in the first data set) multiple operative parameters P (even several hundred) of the carousel 2, allowing the operator to verify numerous factors for each filmed position of the carousel 2.

Preferably, in the preferred case in which multiple operative parameters P of the carousel 2 are transmitted to the electronic device 5, the above-described operations for the single operative parameter P are applied to each of the received operative parameters P (or for a part of these).

Advantageously, in the case of transmission of multiple operative parameters P, the corresponding first successions of acquired values Va have the same first sampling frequency with the same first time stamp.

In addition, advantageously, the present control system 1 allows the operator to perform all of the aforesaid verifications directly onsite, in particular even without the presence of an Internet network for the transmission of the information to a remote processing station. Preferably, the operations for executing the operations of synchronization and interpolation described above can be implemented by the processing unit 8 by means of programs installed directly in the electronic device 5 and/or programs on remote servers (also cloud). Preferably, the aforesaid second data set is stored in the memory 11 of the electronic device 5, in particular in order to be subsequently accessible so as to show the relative information in the electronic device 5 itself or transmit to other devices (in particular also by means of cloud and/or web applications).

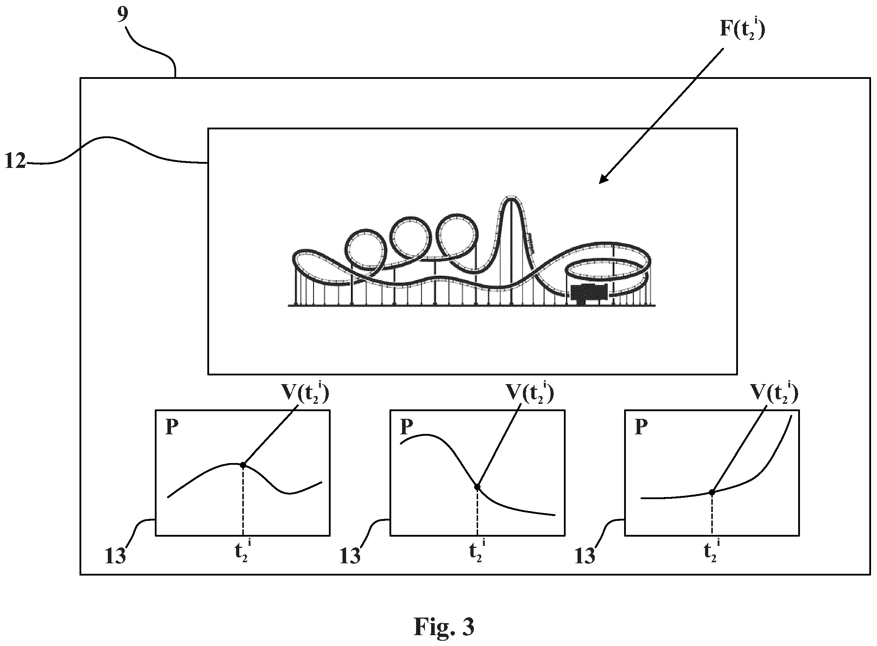

Advantageously, with reference to the example of figure 3, the processing unit 8 of the electronic device 5 is arranged for actuating the screen 9 of the latter in order to reproduce, preferably in a first frame 12 of the screen 9 itself, a video given by the photograms F generated by the video camera 6.

Preferably, such video is reproduced also substantially in real time during the time interval in which the video camera 6 films the carousel 2.

Of course, the electronic device 5 is actuatable by the operator to reproduce the video on its screen 9 even after the acquisition, in order to execute suitable re-examinations of the carousel 2 (in particular for comparing the images of the photograms F with the values V of the operative parameter P).

Advantageously, the processing unit 8 of the electronic device 5 is arranged for actuating the screen 9 in order to reproduce, preferably in a second frame 13 of the latter, the second succession of values V of the operative parameter P, such that the operator can simultaneously observe the video and the progression of the operative parameter P. In particular, the screen 9 is arranged for displaying multiple second frames 13, so as to simultaneously represent multiple operative parameters P of the carousel 2 (as in the example of figure 3).

Advantageously, when each photogram F is displayed on the screen 9, the processing unit 8 (in particular by means of the video module 10) commands the screen 9 to indicate the value V of the second succession of values V associated with the same second time instant t₂ of the displayed photogram F.

Such indication can for example be implemented by reproducing the value V and/or by means of a suitable indication on a graph of the time progression of the operative parameter P (as in the example of figure 3).

In this manner, advantageously, the present control system 1 is capable of displaying, on the electronic device 5, each photogram F of the video synchronized with the corresponding value V of the operative parameter P reasonably determined by the carousel 2 in the instant in which this is represented in such photogram F.

Preferably, the interpolation function which the processing unit 8 implements for calculating the interpolated values Vi of the operative parameter P is executed in post-processing. Suitably, the display of the photograms F and of the second succession of values V of the operative parameter P is implementable on the screen 9 of the electronic device 5 after the time interval in which the video camera 6 films the carousel. Advantageously, the interpolation function comprises at least one linear interpolation function.

Preferably, the interpolation function is implemented by means of other interpolation methods, selected for example from among the following group of functions: a pattern recognition function, a bilinear interpolation function, a bicubic interpolation function, a Bezier interpolation function, a spline interpolation function.

Advantageously, the different types of interpolation function can be selected by the processing unit 8 based on the characteristics of the first received data set, for example from the progression of the acquired values Va and/or from the fact that in such first data set, sections with missing values are present.

In particular, it is possible that in the first succession of acquired values Va, gaps are present for one or more first time instants t₁ of the first time stamp, for example since they were not acquired by the control unit 3 (also for reasons linked to the sensors) or due to disturbances during the transmission between the carousel 2 and the electronic device 5.

In such case, the processing unit 8 is arranged for identifying such gaps and for calculating interpolated values Vi also at the first time instants t₁ affected by such gaps.

The calculation of such interpolated values Vi is also executed based on the available acquired values Va, in particular one or more sections of the first succession of the acquired values Va. Such calculation for example can be executed by means of a linear interpolation function or a pattern recognition function, based on the progression of the operative parameter P in the analyzed sections.

Advantageously, in the event in which the interpolation function is implemented by means of a pattern recognition function, the latter identifies at least one range of the first time instant t₁ in which the gap is present, and based on the acquired values Va in such range, defines a given pattern.

Hence, the function searches such specific pattern, in sections of the first succession which are prior to and/or following the gap, and selects a section in which a sequence of acquired values Va is present corresponding to the sought-after pattern. The function thus obtains, based on such sequence, the interpolated values V1 to be associated with the first time instant t₁ in which the gap is present.

Advantageously, with reference to the scheme of figure 1, the control system 1 comprises a remote server 14, which is in data communication, by means of Internet network, with the transmission unit 4 of the carousel 2 and with the communication unit 7 of the electronic device 5.

In particular, such remote server 14 can comprise a local computer (installed for example at the seat of the company charged with the maintenance of the carousels) and/or, possibly also in part, be implemented in cloud.

The transmission unit 4 is arranged for sending, to the remote server 14, a third data set containing a subsampling of the first succession of the acquired values Va of the operative parameter P, so as to make available the information of such third data set also to operators who operate remotely with respect to the site of the carousel 2.

Advantageously, the third data set is transmitted with a third sampling frequency (e.g. 10 Hz) smaller than the first sampling frequency with which the first data set is sent from the transmission unit 4 of the carousel 2 to the electronic device 5. This allows the remote server 14 to receive the third data set with a reduced delay and, therefore, allows the remote operators to substantially access in real time the values of the operative parameter P, nearly simultaneously with the operator onsite who is using the electronic device 5, for example by means of a video terminal 15 connected to the remote server 14.

Advantageously, the processing unit 8 of the electronic device 5 is arranged for commanding the communication unit 7 to send, to the remote server 14, a fourth data set containing the aforesaid second data set (comprising second succession of values V of the operative parameter P) and the video data acquired from the video camera 6. The information contained in such fourth data set are in this manner can be archived at the remote server 14 and in particular accessible also for remote operators in order to execute the control of the carousel 2 (as discussed above).

Also forming the object of the present invention is a control method for carousels, implemented in particular by means of the control system 1 of the above-described type.

Hereinbelow, for the sake of description simplicity, reference will be made to the same nomenclature introduced up to now, even if it must be intended that the present method can also be obtained with systems not provided with all of the above-considered characteristics. Advantageously, the control method is started by an operator by means of a given command of the electronic device 5, in particular simultaneously with the starting of the video camera 6 that films the carousel 2 (or a part of interest thereof) for a given time interval.

The control method for carousels according to the present invention comprises an acquisition step, in which the control unit 3 of the carousel 2 detects, at least in the aforesaid time interval, at least one operative parameter P associated with the carousel 2 itself. Advantageously, in such acquisition step the control unit 3 acquires multiple operative parameters P, directly or by means of sensor means, in accordance with that discussed above.

The method also comprises a transmission step, in which the transmission unit 4 of the carousel 2 transmits, with a given first sampling frequency, a first data set containing a first time succession of acquired values Va of the operative parameter P which were acquired by the control unit 3 in the aforesaid time interval. In accordance with that discussed above, each acquired value Va is associated with a given first time instant t₁ determined by the first sampling frequency.

Preferably, according to a particular embodiment, the acquisition step is executed continuously from the control unit 3 (according to programmed settings of the latter), and the transmission unit 4 transmits to the electronic device 5 a subset of the data acquired by the control unit 3 relative to the time interval in which the filming of the video is carried out.

The method also comprises a reception step, in which the communication unit 7 of the electronic device 5 receives the aforesaid first data set from the transmission unit 4 of the carousel 2.

The method also comprises an image acquisition step, in which the video camera films the carousel 2 for the aforesaid time interval and acquires a time sequence of photograms F.

As stated above, the start of the image acquisition step is advantageously actuated by the operator by means of the electronic device 5. Following such start, the processing unit 8 initializes the process of saving the video data generated by the video camera 6 and the first data set containing the acquired values Va of the operative parameters P and received by the transmission unit 4 of the carousel 2.

In the image acquisition step, the photograms F are acquired from the video camera 6 with a given second sampling frequency greater than the first sampling frequency, in which each photogram F is associated with a corresponding second time instant t₂ determined by such second sampling frequency.

The method also comprises a synchronization step, in which the processing unit 8 synchronizes the first time instants t₁ of the first time succession of acquired values Va of the operative parameter P with the second time instants t₂ of the time sequence of said photograms, in a manner such to align at least the initial instant of the first and of the second time stamp respectively of the acquired values Va and of the photograms F. Advantageously, such synchronization step is implemented by subtracting, from the first time instants t₁, a delay time indicative of the transmission time of the first data set from the transmission unit 4 of the carousel 2 to the communication unit 7 of the electronic device 5, as discussed above.

The method also comprises an interpolation step, in which the processing unit 8 applies, to the first time succession of acquired values Va of the operative parameter P, at least one interpolation function, which, based on such acquired values Va, calculates interpolated values Vi of the operative parameter P which are associated with second time instants which are prior to and/or following each first time instant t₁.

In this manner, as described above in detail, the present control system 1 allows determining reliable values of the operative parameter P for all the photograms F of the video of the carousel 2 filmed by the video camera 6 of the electronic device 5. Advantageously, the interpolation step is implemented by using, as interpolation function, one or more of the following group: a linear interpolation function, a pattern recognition function, a bilinear interpolation function, a bicubic interpolation function, a Bezier interpolation function, a spline interpolation function.

Preferably, following the aforesaid interpolation step, the processing unit 8 generates a second data set containing a second succession of values of the operative parameter P obtained from the aforesaid interpolated values Vi and advantageously from the acquired values Va, wherein each value of such second succession is associated with a corresponding second time instant t₂.

In particular, the aforesaid second data set and the video data are stored in the memory 11 of the electronic device 5, and/or transmitted to the remote server 14 of the control system 1.

Advantageously, the control method comprises a display step, in which on one screen (in particular on the screen 9 of the electronic device 5), preferably in the first frame 12 of the screen 9, a video is reproduced that is formed by the photograms F and, preferably in the second frame 13 of the screen 9, the second succession of values V of the operative parameter P.

When each photogram F is displayed in the screen, also the value V of the second succession of values V is indicated therein that is associated with the same second time instant t₂ of the displayed photogram F, preferably by means of the already discussed above.

Optionally, the aforesaid display step can be implemented also on a screen different from the screen 9 of the electronic device 5, for example on the video terminal 15 of the remote server 14.

The invention thus described therefore attains the pre-established objects.

## Claims

1. Control system (1) for carousels, which comprises:
- at least one carousel (2) comprising:
- at least one control unit (3) arranged for detecting at least one operative parameter (P) associated with said carousel (2);
- at least one transmission unit (4) operatively connected to said control unit (3) and arranged for transmitting a first data set containing a first succession of acquired values (Va) of said operative parameter (P), with a given first sampling frequency, wherein each said acquired value (Va) is associated with a corresponding first time instant (t₁) determined by said first sampling frequency;
- at least one portable electronic device (5), which comprises:
- at least one video camera (6),
- at least one communication unit (7) arranged for communicating with the transmission unit (4) of said carousel (2);
- at least one processing unit (8) operatively connected to said video camera (6) and to said communication unit (7), and arranged for:
• actuating said video camera (6) to film at least part of said carousel (2) in a given time interval, and to acquire, with a given second sampling frequency greater than said first sampling frequency, a sequence of photograms (F), wherein each said photogram (F) is associated with a corresponding second time instant (t₂) determined by said second sampling frequency,
• actuating said communication unit (7) to receive, from said transmission unit (4), said first data set containing the acquired values (Va) of said operative parameter (P) which have been acquired by said control unit (3) in said time interval,
• synchronizing the first time instants (t₁) associated with the first succession of acquired values (Va) of said operative parameter (P) with the second time instants (t₂) associated with the time sequence of said photograms (F),
• applying, to the first succession of acquired values (Va) of said operative parameter (P), at least one interpolation function, which, based on said acquired values (Va), calculates interpolated values (Vi) of said operative parameter (P), said interpolated values (Vi) being associated with said second time instants (t₂) which are prior to and/or following each said first time instant (t₁),
• generating a second data set containing a second succession of values (V) of said operative parameter (P) obtained at least from said interpolated values (Vi), wherein each said value (V) is associated with a corresponding said second time instant (t₂).

2. Control system (1) according to claim 1, **characterized in that** said electronic device (5) comprises a screen (9);
wherein said processing unit (8) is arranged for actuating said screen (9) in order to:
- reproduce said second succession of values (V) of said operative parameter (P) and at least one video formed by said photograms (F), and
- when each said photogram (F) is displayed, indicate in said screen (9) the value (V) of said second succession associated with the same said second time instant (t₂) of said displayed photogram (F).

3. Control system (1) according to claim 1 or 2, **characterized in that** said electronic device (5) comprises at least one memory (11), and said processing unit (8) is arranged for storing at least said second data set in said memory (11).

4. Control system (1) according to any one of the preceding claims, **characterized in that** said processing unit (8) is arranged for synchronizing said first time instants (t₁) with said second time instants (t₂) by subtracting, from said first time instants (t₁), at least one given delay time determined by the transmission of said first data set from said transmission unit (4) to said communication unit (7).

5. Control system (1) according to any one of the preceding claims, **characterized in that** said at least one interpolation function is selected from among at least one of the following group: a linear interpolation function, a pattern recognition function, a bilinear interpolation function, a bicubic interpolation function, a Bezier interpolation function, a spline interpolation function.

6. Control system (1) according to any one of the preceding claims, **characterized in that** it comprises at least one remote server (14) placed in data communication, by means of Internet network, at least with the transmission unit (4) of said carousel (2) and with the communication unit (7) of said electronic device (5);
wherein said transmission unit (4) is arranged for sending to said remote server (14) a third data set containing a subsampling of the first succession of acquired values (Va) of said operative parameter (P), with a third sampling frequency smaller than said first sampling frequency.

7. Control method for carousels, which is implemented by means of a control system (1) which comprises:
- at least one carousel (2) comprising:
- at least one control unit (3) arranged for detecting at least one operative parameter (P) associated with said carousel (2),
- at least one transmission unit (4) operatively connected to said control unit (3);
- at least one portable electronic device (5), which comprises:
- at least one video camera (6),
- at least one communication unit (7) arranged for communicating with the transmission unit (4) of said carousel (2),
- at least one processing unit (8) operatively connected to said video camera (6) and to said communication unit (7);
said control method comprising:
- an acquisition step, in which said control unit (3) detects, at least in a given time interval, said at least one operative parameter (P) associated with said carousel (2);
- a transmission step, in which said transmission unit (4) transmits a first data set containing a first time succession of acquired values (Va) of said operative parameter (P), with a given first sampling frequency, wherein each said acquired value (Va) is associated with a given first time instant (t₁) determined by said first sampling frequency;
- a reception step, in which said communication unit (7) receives, from said transmission unit (4), said first data set containing said first time succession of values (Va) of said operative parameter (P) acquired from said control unit (3) in said time interval;
- an image acquisition step, in which said video camera (6) films at least part of said carousel (2) in said given time interval, and acquires, with a given second sampling frequency greater than said first sampling frequency, a time sequence of photograms (F), wherein each said photogram (F) is associated with a corresponding second time instant (t₂) determined by said second sampling frequency;
- a synchronization step, in which said processing unit (8) synchronizes the first time instants (t₁) of the first time succession of acquired values (Va) of said operative parameter (P) with the second time instants (t₂) of the time sequence of said photograms (F);
- an interpolation step, in which said processing unit (8) applies, to said first time succession of acquired values (Va) of said operative parameter (P), at least one interpolation function, which, based on said acquired values (Va), calculates interpolated values (Vi) of said operative parameter (P) which are associated with second time instants (t₂) which are prior to and/or following each said first time instant (t₁);
wherein, following said interpolation step, said processing unit (8) generates a second data set containing a second succession of values (V) of said operative parameter (P) obtained at least from said interpolated values (Vi), wherein each said value (V) of said second succession is associated with a corresponding said second time instant (t₂).

8. Control method according to claim 7, **characterized in that** it comprises a display step, in which the following is reproduced on a screen (9):
- said second succession of values (V) of said operative parameter (P) and a video formed by said photograms (F), and
- when each said photogram (F) is displayed, the value (V) of said second succession associated with the same said second time instant (t₂) of said displayed photogram (F) is indicated in said screen (9).

9. Control method according to claim 7 or 8, **characterized in that**, in said synchronization step, said first time instants (t₁) are synchronized with said second time instants (t₂) by subtracting from said first time instants (t₁) a delay time indicative of the transmission time of said first data set from said transmission unit (4) to said communication unit (7).

10. Control method according to any one of the claims from 7 to 9, **characterized in that** said at least one interpolation function is selected from at least one of the following group: a linear interpolation function, a pattern recognition function, a bilinear interpolation function, a bicubic interpolation function, a Bezier interpolation function, a spline interpolation function.

## Patentansprüche

1. System zur Steuerung (1) von Karussellen, das Folgendes umfasst:
- mindestens ein Karussell (2), umfassend:
- mindestens eine Steuereinheit (3), die darauf ausgelegt ist, mindestens einen dem genannten Karussell (2) zugeordneten Betriebsparameter (P) zu erfassen;
- mindestens eine Übertragungseinheit (4), die operativ mit der genannten Steuereinheit (3) verbunden und darauf ausgelegt ist, einen ersten Datensatz, der eine erste Folge von erfassten Werten (Va) des genannten Betriebsparameters (P) enthält, mit einer bestimmten ersten Abtastfrequenz zu übertragen, wobei jeder genannte erfasste Wert (Va) einem entsprechenden ersten Zeitpunkt (t₁) zugeordnet ist, der durch die genannte erste Abtastfrequenz bestimmt wird;
- mindestens eine tragbare elektronische Vorrichtung (5), die Folgendes umfasst:
- mindestens eine Kamera (6),
- mindestens eine Kommunikationseinheit (7), die darauf ausgelegt ist, mit der Übertragungseinheit (4) des genannten Karussells (2) zu kommunizieren;
- mindestens eine Verarbeitungseinheit (8), die operativ mit der genannten Kamera (6) und der genannten Kommunikationseinheit (7) verbunden ist, und darauf ausgelegt ist:
• die genannte Kamera (6) in Betrieb zu nehmen, um mindestens einen Teil des genannten Karussells (2) in einem bestimmten Zeitintervall zu filmen und, mit einer bestimmten zweiten Abtastfrequenz, die größer als die genannte erste Abtastfrequenz ist, eine Folge von Einzelbildern (F) zu erfassen, wobei jedes genannte Einzelbild (F) einem entsprechenden zweiten Zeitpunkt (t₂) zugeordnet ist, der durch die genannte zweite Abtastfrequenz bestimmt wird,
• die genannte Kommunikationseinheit (7) in Betrieb zu nehmen, um von der genannten Übertragungseinheit (4) den genannten ersten Datensatz zu empfangen, der die erfassten Werte (Va) des genannten Betriebsparameters (P) enthält, die von der genannten Steuereinheit (3) in dem genannten Zeitintervall erfasst wurden,
• die ersten Zeitpunkte (t₁), die der ersten Folge von erfassten Werten (Va) des genannten Betriebsparameters (P) zugeordnet sind, mit den zweiten Zeitpunkten (t₂) zu synchronisieren, die der zeitlichen Folge der genannten Einzelbilder (F) zugeordnet sind,
• auf die erste Folge von erfassten Werten (Va) des genannten Betriebsparameters (P) mindestens eine Interpolationsfunktion anzuwenden, die, auf der Grundlage der genannten erfassten Werte (Va), interpolierte Werte (Vi) des genannten Betriebsparameters (P) berechnet, wobei diese interpolierten Werte (Vi) den genannten zweiten Zeitpunkten (t₂) vor und/oder nach jedem genannten ersten Zeitpunkt (t₁) zugeordnet sind,
• einen zweiten Datensatz zu erzeugen, der eine zweite Folge von Werten (V) des genannten Betriebsparameters (P) enthält, die mindestens aus den genannten interpolierten Werten (Vi) erhalten wird, wobei jeder genannte Wert (V) einem entsprechenden genannten zweiten Zeitpunkt (t₂) zugeordnet ist.

2. System zur Steuerung (1) nach Anspruch 1, **dadurch gekennzeichnet, dass** die genannte elektronische Vorrichtung (5) einen Bildschirm (9) umfasst;
wobei die genannte Verarbeitungseinheit (8) darauf ausgelegt ist, den genannten Bildschirm (9) zu aktivieren, um:
- die genannte zweite Folge von Werten (V) des genannten Betriebsparameters (P) und mindestens ein aus den genannten Einzelbildern (F) bestehendes Video wiederzugeben, und
- wenn jedes genannte Einzelbild (F) angezeigt wird, auf dem genannten Bildschirm (9) den Wert (V) der genannten zweiten Folge anzuzeigen, der dem genannten zweiten Zeitpunkt (t₂) des genannten angezeigten Einzelbildes (F) zugeordnet ist.

3. System zur Steuerung (1) nach Anspruch 1 oder 2, **dadurch gekennzeichnet, dass** die genannte elektronische Vorrichtung (5) mindestens einen Speicher (11) umfasst und die genannte Verarbeitungseinheit (8) darauf ausgelegt ist, mindestens den genannten zweiten Datensatz in dem genannten Speicher (11) zu speichern.

4. System zur Steuerung (1) nach einem beliebigen der vorangegangenen Ansprüche, **dadurch gekennzeichnet, dass** die genannte Verarbeitungseinheit (8) darauf ausgelegt ist, die genannten ersten Zeitpunkte (t₁) mit den genannten zweiten Zeitpunkten (t₂) zu synchronisieren, indem sie, von den genannten ersten Zeitpunkten (t₁), mindestens eine bestimmte Verzögerungszeit subtrahiert, die durch die Übertragung des genannten ersten Datensatzes von der genannten Übertragungseinheit (4) an die genannte Kommunikationseinheit (7) bestimmt ist.

5. System zur Steuerung (1) nach einem beliebigen der vorangegangenen Ansprüche, **dadurch gekennzeichnet, dass** die genannte mindestens eine Interpolationsfunktion unter mindestens einer Funktion der folgenden Gruppe gewählt wird: eine lineare Interpolationsfunktion, eine Mustererkennungsfunktion, eine bilineare Interpolationsfunktion, eine bikubische Interpolationsfunktion, eine Bézier-Interpolationsfunktion, eine Spline-Interpolationsfunktion.

6. System zur Steuerung (1) nach einem beliebigen der vorangegangenen Ansprüche, **dadurch gekennzeichnet, dass** es mindestens einen standortfernen Server (14) umfasst, der über ein Internet-Netzwerk mindestens mit der Übertragungseinheit (4) des genannten Karussells (2) und mit der Kommunikationseinheit (7) der genannten elektronischen Vorrichtung (5) in Datenkommunikation steht;
wobei die genannte Übertragungseinheit (4) darauf ausgelegt ist, an den genannten standortfernen Server (14) einen dritten Datensatz zu senden, der ein Downsampling der ersten Folge von erfassten Werten (Va) des genannten Betriebsparameters (P) mit einer dritten Abtastfrequenz enthält, die niedriger als die genannte erste Abtastfrequenz ist.

7. Verfahren zur Steuerung von Karussellen, das mittels eines Systems zur Steuerung (1) implementiert wird, das Folgendes umfasst:
- mindestens ein Karussell (2), umfassend:
- mindestens eine Steuereinheit (3), die darauf ausgelegt ist, mindestens einen dem genannten Karussell (2) zugeordneten Betriebsparameter (P) zu erfassen,
- mindestens eine Übertragungseinheit (4), die operativ mit der genannten Steuereinheit (3) verbunden ist;
- mindestens eine tragbare elektronische Vorrichtung (5), die Folgendes umfasst:
- mindestens eine Kamera (6),
- mindestens eine Kommunikationseinheit (7), die darauf ausgelegt ist, mit der Übertragungseinheit (4) des genannten Karussells (2) zu kommunizieren,
- mindestens eine Verarbeitungseinheit (8), die operativ mit der genannten Kamera (6) und der genannten Kommunikationseinheit (7) verbunden ist;
wobei das genannte Steuerungsverfahren Folgendes umfasst:
- einen Erfassungsschritt, bei dem die genannte Steuereinheit (3) mindestens in einem bestimmten Zeitintervall den genannten mindestens einen Betriebsparameter (P) erfasst, der dem genannten Karussell (2) zugeordnet ist;
- einen Übertragungsschritt, bei dem die genannte Übertragungseinheit (4) einen ersten Datensatz, der eine erste zeitliche Folge von erfassten Werten (Va) des genannten Betriebsparameters (P) enthält, mit einer bestimmten ersten Abtastfrequenz überträgt, wobei jeder genannte erfasste Wert (Va) einem bestimmten ersten Zeitpunkt (t₁) zugeordnet ist, der durch die genannte erste Abtastfrequenz bestimmt wird;
- einen Empfangsschritt, bei dem die genannte Kommunikationseinheit (7) von der genannten Übertragungseinheit (4) den genannten ersten Datensatz empfängt, der die genannte erste zeitliche Folge von Werten (Va) des von der genannten Steuereinheit (3) in dem genannten Zeitintervall erfassten genannten Betriebsparameters (P) enthält;
- einen Bilderfassungsschritt, bei dem die genannte Kamera (6) mindestens einen Teil des genannten Karussells (2) in dem genannten bestimmten Zeitintervall filmt und, mit einer bestimmten zweiten Abtastfrequenz, die größer ist als die genannte erste Abtastfrequenz, eine zeitliche Folge von Einzelbildern (F) erfasst, wobei jedes genannte Einzelbild (F) einem entsprechenden zweiten Zeitpunkt (t₂) zugeordnet ist, der durch die genannte zweite Abtastfrequenz bestimmt wird;
- einen Synchronisationsschritt, bei dem die genannte Verarbeitungseinheit (8) die ersten Zeitpunkte (t₁) der ersten zeitlichen Folge von erfassten Werten (Va) des genannten Betriebsparameters (P) mit den zweiten Zeitpunkten (t₂) der zeitlichen Folge der genannten Einzelbilder (F) synchronisiert;
- einen Interpolationsschritt, bei dem die genannte Verarbeitungseinheit (8) auf die genannte erste zeitliche Folge von erfassten Werten (Va) des genannten Betriebsparameters (P) mindestens eine Interpolationsfunktion anwendet, die, auf der Grundlage der genannten erfassten Werte (Va), interpolierte Werte (Vi) des genannten Betriebsparameters (P) berechnet, die zweiten Zeitpunkten (t₂) vor und/oder nach jedem genannten ersten Zeitpunkt (t₁) zugeordnet werden;
wobei, im Anschluss an den genannten Interpolationsschritt, die genannte Verarbeitungseinheit (8) einen zweiten Datensatz erzeugt, der eine zweite Folge von Werten (V) des genannten Betriebsparameters (P) enthält, die mindestens aus den genannten interpolierten Werten (Vi) erhalten wird, wobei jeder genannte Wert (V) der genannten zweiten Folge einem entsprechenden genannten zweiten Zeitpunkt (t₂) zugeordnet ist.

8. Steuerungsverfahren nach Anspruch 7, **dadurch gekennzeichnet, dass** es einen Anzeigeschritt umfasst, bei dem auf einem Bildschirm (9) Folgendes wiedergegeben wird:
- die genannte zweite Folge von Werten (V) des genannten Betriebsparameters (P) und ein aus den genannten Einzelbildern (F) bestehendes Video, und
- wenn jedes genannte Einzelbild (F) angezeigt wird, wird auf dem genannten Bildschirm (9) der Wert (V) der genannten zweiten Folge angezeigt, der dem genannten zweiten Zeitpunkt (t₂) des genannten Einzelbildes (F) zugeordnet ist.

9. Steuerungsverfahren nach Anspruch 7 oder 8, **dadurch gekennzeichnet, dass** bei dem genannten Synchronisationsschritt die genannten ersten Zeitpunkte (t₁) mit den genannten zweiten Zeitpunkten (t₂) synchronisiert werden, indem von den genannten ersten Zeitpunkten (t₁) eine Verzögerungszeit subtrahiert wird, die die Übertragungszeit des genannten ersten Datensatzes von der genannten Übertragungseinheit (4) an die genannte Kommunikationseinheit (7) angibt.

10. Steuerungsverfahren nach einem beliebigen der Ansprüche 7 bis 9, **dadurch gekennzeichnet, dass** die genannte mindestens eine Interpolationsfunktion unter mindestens einer Funktion aus der folgenden Gruppe gewählt wird: eine lineare Interpolationsfunktion, eine Mustererkennungsfunktion, eine bilineare Interpolationsfunktion, eine bikubische Interpolationsfunktion, eine Bézier-Interpolationsfunktion, eine Spline-Interpolationsfunktion.

## Revendications

1. Système de commande (1) de carrousels, comprenant :
- au moins un carrousel (2) comprenant :
- au moins une unité de commande (3) conçue pour détecter au moins un paramètre opérationnel (P) associé audit carrousel (2) ;
- au moins une unité de transmission (4) reliée fonctionnellement à ladite unité de commande (3) et conçue pour transmettre un premier ensemble de données contenant une première succession de valeurs acquises (Va) dudit paramètre opérationnel (P), avec une première fréquence d'échantillonnage donnée, où chaque valeur acquise (Va) est associée à un premier instant temporel (t₁) correspondant déterminé par ladite première fréquence d'échantillonnage ;
- au moins un dispositif électronique (5) portable, qui comprend :
- au moins une caméra (6),
- au moins une unité de communication (7) conçue pour communiquer avec l'unité de transmission (4) dudit carrousel (2) ;
- au moins une unité de traitement (8) reliée fonctionnellement à ladite caméra (6) et à ladite unité de communication (7), et conçue pour :
• actionner ladite caméra (6) pour filmer au moins une partie dudit carrousel (2) dans un intervalle de temps donné, et pour acquérir, avec une seconde fréquence d'échantillonnage donnée supérieure à ladite première fréquence d'échantillonnage, une séquence de photogrammes (F), où chaque photogramme (F) est associé à un second instant temporel (t₂) correspondant déterminé par ladite seconde fréquence d'échantillonnage,
• actionner ladite unité de communication (7) pour recevoir de ladite unité de transmission (4) ledit premier ensemble de données contenant les valeurs acquises (Va) dudit paramètre opérationnel (P), qui ont été acquises par ladite unité de commande (3) dans ledit intervalle de temps,
• synchroniser les premiers instants temporels (t₁) associés à la première succession de valeurs acquises (Va) dudit paramètre opérationnel (P) avec les seconds instants temporels (t₂) associés à la séquence temporelle desdits photogrammes (F),
• appliquer à la première succession de valeurs acquises (Va) dudit paramètre opérationnel (P) au moins une fonction d'interpolation qui, sur la base desdites valeurs acquises (Va), calcule des valeurs interpolées (Vi) dudit paramètre opérationnel (P), valeurs interpolées (Vi) étant associées auxdits seconds instants temporels (t₂) antérieurs et/ou postérieurs à chaque premier instant temporel (t₁),
• générer un second ensemble de données contenant une seconde succession de valeurs (V) dudit paramètre opérationnel (P) obtenue au moins à partir desdites valeurs interpolées (Vi), où chaque valeur (V) est associée audit second instant temporel (t₂) correspondant.

2. Système de commande (1) selon la revendication 1, **caractérisé en ce que** ledit dispositif électronique (5) comprend un écran (9) ;
où ladite unité de traitement (8) est conçue pour activer ledit écran (9) pour :
- reproduire ladite seconde succession de valeurs (V) dudit paramètre opérationnel (P) et au moins une vidéo formée par lesdits photogrammes (F), et
- lorsque chaque photogramme (F) est affiché, indiquer sur ledit écran (9) la valeur (V) de ladite seconde succession associée au même second instant temporel (t₂) dudit photogramme (F) affiché.

3. Système de commande (1) selon la revendication 1 ou 2, **caractérisé en ce que** ledit dispositif électronique (5) comprend au moins une mémoire (11), et que ladite unité de traitement (8) est conçue pour mémoriser au moins ledit second ensemble de données dans ladite mémoire (11).

4. Système de commande (1) selon l'une quelconque des revendications précédentes, **caractérisé en ce que** ladite unité de traitement (8) est conçue pour synchroniser lesdits premiers instants temporels (t₁) avec lesdits seconds instants temporels (t₂) en soustrayant, de ces premiers instants temporels (t₁), au moins un temps de retard donné déterminé par la transmission dudit premier ensemble de données de ladite unité de transmission (4) à ladite unité de communication (7).

5. Système de commande (1) selon l'une quelconque des revendications précédentes, **caractérisé en ce que** ladite au moins une fonction d'interpolation est choisie parmi au moins une des fonctions du groupe suivant : une fonction d'interpolation linéaire, une fonction de reconnaissance de formes, une fonction d'interpolation bilinéaire, une fonction d'interpolation bicubique, une fonction d'interpolation de Bézier, une fonction d'interpolation spline.

6. Système de commande (1) selon l'une quelconque des revendications précédentes, **caractérisé en ce qu'**il comprend au moins un serveur distant (14) placé en communication de données, via un réseau Internet, au moins avec l'unité de transmission (4) dudit carrousel (2) et avec l'unité de communication (7) dudit dispositif électronique (5) ;
où ladite unité de transmission (4) est conçue pour envoyer au serveur distant (14) un troisième ensemble de données contenant un sous-échantillonnage de la première succession de valeurs acquises (Va) dudit paramètre opérationnel (P), avec une troisième fréquence d'échantillonnage inférieure à ladite première fréquence d'échantillonnage.

7. Procédé de commande de carrousels, qui est mis en œuvre par un système de commande (1) comprenant :
- au moins un carrousel (2) comprenant :
- au moins une unité de commande (3) conçue pour détecter au moins un paramètre opérationnel (P) associé audit carrousel (2),
- au moins une unité de transmission (4) reliée fonctionnellement à ladite unité de commande (3) ;
- au moins un dispositif électronique (5) portable, qui comprend :
- au moins une caméra (6),
- au moins une unité de communication (7) conçue pour communiquer avec l'unité de transmission (4) dudit carrousel (2),
- au moins une unité de traitement (8) reliée fonctionnellement à ladite caméra (6) et à ladite unité de communication (7) ;
ledit procédé de commande comprenant :
- une étape d'acquisition, dans laquelle ladite unité de commande (3) détecte, au moins dans un intervalle de temps donné, ledit au moins un paramètre opérationnel (P) associé audit carrousel (2) ;
- une étape de transmission, dans laquelle ladite unité de transmission (4) transmet un premier ensemble de données contenant une première succession de valeurs acquises (Va) dudit paramètre opérationnel (P), avec une première fréquence d'échantillonnage donnée, où chaque valeur acquise (Va) est associée à un premier instant temporel (t₁) donné déterminé par ladite première fréquence d'échantillonnage ;
- une étape de réception, dans laquelle ladite unité de communication (7) reçoit de ladite unité de transmission (4) ledit premier ensemble de données contenant ladite première succession temporelle de valeurs (Va) dudit paramètre opérationnel (P) acquises par ladite unité de commande (3) dans ledit intervalle de temps ;
- une étape d'acquisition d'images, dans laquelle ladite caméra (6) filme au moins une partie dudit carrousel (2) dans ledit intervalle de temps donné, et acquit, avec une seconde fréquence d'échantillonnage donnée supérieure à ladite première fréquence d'échantillonnage, une séquence temporelle de photogrammes (F), dans laquelle chaque photogramme (F) est associé à un second instant temporel (t₂) correspondant déterminé par ladite seconde fréquence d'échantillonnage ;
- une étape de synchronisation, dans laquelle ladite unité de traitement (8) synchronise les premiers instants temporels (t₁) de la première succession temporelle de valeurs acquises (Va) dudit paramètre opérationnel (P) avec les seconds instants temporels (t₂) de la séquence temporelle desdits photogrammes (F) ;
- une étape d'interpolation, dans laquelle ladite unité de traitement (8) applique à ladite première succession temporelle de valeurs acquises (Va) dudit paramètre opérationnel (P) au moins une fonction d'interpolation qui, sur la base desdites valeurs acquises (Va), calcule des valeurs interpolées (Vi) dudit paramètre opérationnel (P), qui sont associées aux seconds instants temporels (t₂) antérieurs et/ou postérieurs à chaque premier instant temporel (t₁);
où, après ladite étape d'interpolation, ladite unité de traitement (8) génère un second ensemble de données contenant une seconde succession de valeurs (V) dudit paramètre opérationnel (P) obtenue au moins à partir desdites valeurs interpolées (Vi), dans lequel chaque valeur (V) de ladite seconde succession est associée audit second instant temporel (t₂) correspondant.

8. Procédé de commande selon la revendication 7, **caractérisé en ce qu'**il comprend une étape d'affichage, dans laquelle sur un écran (9) est affiché :
- ladite seconde succession de valeurs (V) dudit paramètre opérationnel (P) et une vidéo formée par lesdits photogrammes (F), et
- lorsque chaque dit photogramme (F) est affiché, la valeur (V) de ladite seconde succession associée au même second instant temporel (t₂) dudit photogramme (F) affiché est indiquée sur ledit écran (9).

9. Procédé de commande selon la revendication 7 ou 8, **caractérisé en ce que**, dans ladite étape de synchronisation, lesdits premiers instants temporels (t₁) sont synchronisés avec lesdits seconds instants temporels (t₂) en soustrayant, desdits premiers instants temporels (t₁), un temps de retard indicatif du temps de transmission dudit premier ensemble de données de ladite unité de transmission (4) à ladite unité de communication (7).

10. Procédé de commande selon l'une quelconque des revendications 7 à 9, **caractérisé en ce que** ladite au moins une fonction d'interpolation est choisie parmi au moins une des fonctions du groupe suivant : une fonction d'interpolation linéaire, une fonction de reconnaissance de formes, une fonction d'interpolation bilinéaire, une fonction d'interpolation bicubique, une fonction d'interpolation de Bézier, une fonction d'interpolation spline.
